# EUROPÄISCHE PATENTSCHRIFT

(11) **EP 3 562 000 B1**
(45) Veröffentlichungstag und Bekanntmachung des Hinweises auf die Patenterteilung: **10.03.2021**
(21) Anmeldenummer: 18169808.5
(22) Anmeldetag: 27.04.2018
(51) Int. Cl.: H02K 3/28, H02K 15/085, H02K 3/12

(54) **VERFAHREN ZUM WICKELN EINER WICKLUNG**
METHOD FOR WINDING A COIL
PROCÉDÉ D'ENROULAGE D'UN ENROULEMENT

(43) Veröffentlichungstag der Anmeldung: 30.10.2019
(73) Patentinhaber: WILO SE, 44263 Dortmund (DE)
(72) Erfinder: Drubel, Oliver, 58849 Herscheid (DE); Wibberich-Klaus, Christoph, 59557 Lippstadt (DE)
(74) Vertreter: Michalski Hüttermann & Partner Patentanwälte mbB

(56) Entgegenhaltungen:
- EP-A2- 2 632 028
- GB-A- 1 079 961
- JP-A- 2013 013 187

## Beschreibung

### Technisches Gebiet

Die Erfindung betrifft ein Verfahren zum Wickeln einer für eine Dreiphasensynchron- oder -asynchronmaschine vorgesehenen Zweischichtwicklung auf einen hohlzylinderförmigen Stator in einem Einzug, mit dem Schritt Bereitstellen des Stators, in welchen ein Rotor in Richtung einer Statorachse einsetzbar ist, wobei der Stator an seiner radialen Innenseite eine Mehrzahl offener Nuten aufweist, welche jeweils in radialer Richtung verlaufen und in welche jeweils eine Unterlagenwicklung als Unterlage in radialer Richtung außen und eine Oberlagenwicklung als Oberlage in radialer Richtung innen einsetzbar ist. Die Erfindung betrifft ferner einen Stator hergestellt nach dem Verfahren sowie die Verwendung des Verfahrens oder des Stators für ein Pumpenaggregat, als Motor und/oder als Generator.

### Hintergrund der Erfindung

Das Wickeln von Zweischichtwicklungen auf hohlzylinderförmige Statoren für Dreiphasensynchron- oder -asynchronmaschinen ist seit Dekaden aus dem Stand der Technik bekannt. Ein elektrischer Draht wird zunächst in einer oder mehreren Windungen, auch Wicklungen oder Einzelspulen genannt, auf eine Schablone in eine geometrische Struktur zu Spulen gewickelt. Die gewickelten Spulen werden sodann in Nuten des Stators eingezogen, um zusammen mit einem in den hohlzylinderförmigen Stator einsetzbaren Rotor die Dreiphasensynchron- oder -asynchron-maschine auszubilden JP2013013187 beschreibt einen solchen Verfahren zum Wickeln einer für eine Dreiphasensynchron- oder -asynchronmaschine vorgesehenen Zweischichtwicklung auf einen hohlzylinderförmigen Stator.

Obwohl das Einziehen der Spulen mittels einer Wickelmaschine automatisierbar ist, sind bei Zweischichtwicklungen abschließende manuelle Eingriffe notwendig, um eine richtige Anordnung der Spulen in der Zweischichtwicklung zu erreichen. Die manuellen Eingriffe erfordern selbstredend gegenüber automatisierten Verfahren einen erhöhten Aufwand und führen zu unerwünschten höheren Herstellungskosten.

### Beschreibung der Erfindung

Ausgehend von dieser Situation ist es eine Aufgabe der vorliegenden Erfindung, ein Verfahren zum Herstellen eines Stators für eine Dreiphasensynchron- oder -asynchronmaschine anzugeben, um eine Zweischichtwicklung automatisiert in Nuten des Stators einbringen zu können.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe durch ein Verfahren zum Wickeln einer für eine Dreiphasensynchron- oder -asynchronmaschine vorgesehenen Zweischichtwicklung auf einen hohlzylinderförmigen Stator in einem Einzug gelöst, mit den Schritten:
Bereitstellen des Stators, in welchen ein Rotor in Richtung einer Statorachse einsetzbar ist, wobei der Stator vorzugsweise an seiner radialen Innenseite eine Mehrzahl N offener Nuten aufweist, welche vorzugweise jeweils in radialer Richtung verlaufen und in welche jeweils eine Unterlagenwicklung als Unterlage in radialer Richtung außen und eine Oberlagenwicklung als Oberlage in radialer Richtung innen einsetzbar sind, wobei N = Lochzahl q ^{∗} Polzahl 2p ^{∗} Phase m, mit Lochzahl q des Stators ≥ 3, Polzahl 2p des Stators ≥ 2 und Phase m = 3, und
nacheinander für jede Phase m und für jede Polpaarzahl p:
Wickeln von p ^{∗} q in Reihe vorgesehener Einzelspulen i einer der jeweiligen Phase m zugeordneten Spulengruppe mit einem Pol eines Poolpaares in eine Nutengruppe von q nebeneinander liegenden Nuten, die sich an eine Nutengruppe der vorherigen Phase anschließt, und mit dem anderen Pol des Poolpaares in eine andere Nutengruppe von q nebeneinander liegenden Nuten, die um 2 ^{∗} q Nuten bestandet zu der Nutengruppe angeordnet ist, so dass nach die Einzelspulen i = 1 ... p ^{∗} q - 2 ^{∗} k der Reihe paarweise zuerst als Unterlagenwicklung und danach als Oberlagenwicklung in einer jeweiligen Nut der Nutengruppen zu liegen kommen, die Einzelspulen i = p ^{∗} q - 2 ^{∗} k +1 ... p ^{∗} q - 1 ^{∗} k in verbleibenden Unterlagen der Nutengruppen zu liegen kommen und die Einzelspulen i = p ^{∗} q - 1 ^{∗} k+1 ... p ^{∗} q ^{∗} k in verbleibenden Oberlagen der Nutengruppen der vorherigen Phase zu liegen kommen, mit Schrittverkürzung k < q.

Ein wesentlicher Vorteil des vorgeschlagenen Verfahrens liegt darin, dass gegenüber aus dem Stand der Technik bekannten Lösungen einerseits ein automatisiertes Herstellen und Einziehen einer Zweischichtwicklung auf einen Stator einer Dreiphasensynchron- oder - asynchronmaschine ermöglicht wird und andererseits die Unterlagenwicklungen und Oberlagenwicklungen ohne Zwischenlagenisolierungen in die Nuten des Stators einsetzbar sind. Denn durch die vorgeschlagenen Verfahrensschritte werden die Einzelspulen nacheinander derart in die Unterlagen und Oberlagen eingesetzt, dass die elektromagnetische Beanspruchung der Einzelspulen minimiert wird und dadurch auf Zwischenlagenisolierungen verzichtet werden kann.

Im Ergebnis kommt das vorgeschlagene Verfahren gänzlich ohne manuelle Eingriffe aus und kann mittels einer Wickelmaschine automatisiert werden. Insofern zeichnet sich das Verfahren aufgrund der Automatisierung sowie der nicht benötigten Zwischenlagenisolierungen durch geringe Herstellungskosten und eine geringere Herstellungszeit aus, da im Vergleich zum Stand der Technik die Anzahl von manuell zu verbindenden Spulenenden erheblich reduziert wird. Gleichzeitig wird durch das vorgeschlagene Verfahren die elektromagnetische Asymmetrie verringert und damit auch die Motorleistung verbessert.

Das Verfahren geht von der Erkenntnis aus, dass zunächst die Einzelspulen mit dem höchsten elektrischen Potential und gleichem oder annähernd gleichem elektrischen Potential paarweise in die Nuten zunächst als Unterlagenwicklung und sodann als Oberlagenwicklung eingelegt werden. Entsprechend einer Schrittverkürzung können Einzelspulen unterschiedlicher Phasen mit demgegenüber geringerem elektrischen Potential paarweise in Nuten eingelegt werden, beispielsweise bei Schrittverkürzung k = 1 jeweils die letzten beiden Einzelspulen zweier Phasen. Da das elektrische Potential dieser Einzelspulen gegenüber den Einzelspulen mit dem höchsten elektrischen Potential wesentlich geringer ist, führt diese Anordnung nur zu einer vernachlässigbaren Asymmetrie.

Das vorgeschlagene Verfahren lässt sich zum Herstellen einer Zweischichtwicklung für eine beliebige Dreiphasensynchron- oder -asynchronmaschine verwenden. Der Stator, auch Statorjoch genannt, ist bevorzugt aus einem Metall oder einer Metalllegierung mit guten elektrischen und magnetischen Eigenschaften ausgebildet. Der Rotor kann bestimmungsgemäß in den hohlzylinderförmigen oder hohlzylinderartigen Stator eingesetzt werden, so dass er sich um die insbesondere in Längsrichtung des Stators erstreckende Statorachse als Rotationsachse drehen kann. Die Nuten sind entsprechend auf der Innenseite des Hohlzylinders in insbesondere gleichen Abständen ausgebildet und erstrecken sich bevorzugt entlang der gesamten Statorachse in radialer Richtung. Die Einzelspulen sind bevorzugt als Kupferdraht ausgebildet, der mit einem Isolationslack beschichtet ist, wobei mehrere Einzelspulen als durchgehender Kupferdraht eine Spule ausbilden. Die paarweise als Unterlagenwicklung und Oberlagenwicklung gewickelten Einzelspulen liegen insbesondere in den Nuten bevorzugt berührend aneinander an. Die Lochzahl q des Stators, die Polzahl 2p des Stators, die Einzelspulen i und/oder die Schrittverkürzung k sind bevorzugt natürliche Zahlen ≥ 1. Der Begriff nacheinander für jede Phase m und für jede Polpaarzahl p bedeutet insbesondere, dass der nachfolgende Schritt des Wickelns für jede der 3 Phasen sowie für jede Polpaarzahl p ausgeführt wird. Zweckmäßigerweise kann mit der ersten Phase und p = 1 begonnen werden, worauf sich die zweite und danach die dritte Phase anschließt. Die Abfolge kann sich für p = 2 usw. wiederholen.

Gemäß einer bevorzugten Weiterbildung weist das Verfahren, insbesondere als Substitut des vorbeschriebenen Wickelschrittes, für jede Polpaarzahl p nacheinander, die folgenden Schritte auf:
Wickeln von p ^{∗} q in Reihe vorgesehener Einzelspulen i einer ersten Spulengruppe der ersten Phase mit einem Pol eines Polpaares in eine erste Nutengruppe von q nebeneinander liegenden Nuten und mit dem anderen Pol des Polpaares in eine zweite Nutengruppe von q nebeneinander liegenden Nuten, die um 2 ^{∗} q Nuten bestandet zu der ersten Nutengruppe angeordnet ist, so dass die Einzelspulen i = 1 ... p ^{∗} q - 2 ^{∗} k der Reihe nach paarweise zuerst als Unterlagenwicklung und danach als Oberlagenwicklung in einer gemeinsamen Nut zu liegen kommen, die Einzelspulen i = p ^{∗} q - 2 ^{∗} k +1 ... p ^{∗} q - 1 ^{∗} k in verbleibenden Unterlagen der ersten Nutengruppe zu liegen kommen und, bei Polpaarzahl p > 1, die Einzelspulen i = p ^{∗} q - 1 ^{∗} k +1 ... p ^{∗} q ^{∗} k in verbleibenden Oberlagen der dritten Phase zu liegen kommen,
Wickeln von p ^{∗} q in Reihe vorgesehener Einzelspulen i einer zweiten Spulengruppe der zweiten Phase mit einem Pol eines Polpaares in eine dritte Nutengruppe von q nebeneinander liegenden Nuten, die sich an die erste Nutengruppe anschließt, und mit dem anderen Pol des Polpaares in eine vierte Nutengruppe von q nebeneinander liegenden Nuten, die um 2 ^{∗} q Nuten bestandet zu der dritten Nutengruppe neben der zweiten Nutengruppe liegt, so dass die Einzelspulen i = 1 ... p ^{∗} q - 2 ^{∗} k der Reihe nach paarweise zuerst als Unterlagenwicklung und danach als Oberlagenwicklung in einer jeweiligen Nut zu liegen kommen, die Einzelspulen i = p ^{∗} q - 2 ^{∗} k +1 ... p ^{∗} q - 1 ^{∗} k in verbleibenden Unterlagen zu liegen kommen und die Einzelspulen i = p ^{∗} q - 1 ^{∗} k +1 ... p ^{∗} q ^{∗} k in verbleibenden Oberlagen der ersten Phase zu liegen kommen, und
Wickeln von p ^{∗} q in Reihe vorgesehener Einzelspulen i einer dritten Spulengruppe der dritten Phase mit einem Pol eines Polpaares in eine fünfte Nutengruppe von q nebeneinander liegenden Nuten, die sich an die dritte Nutengruppe anschließt, und mit dem anderen Pol des Polpaares in eine sechste Nutengruppe von q nebeneinander liegenden Nuten, die um 2 ^{∗} q Nuten bestandet zu der fünften Nutengruppe neben der vierten Nutengruppe liegt, so dass die Einzelspulen i = 1 ... p ^{∗} q - 2 ^{∗} k der Reihe nach paarweise zuerst als Unterlagenwicklung und danach als Oberlagenwicklung in einer jeweiligen Nut zu liegen kommen, die Einzelspulen i = p ^{∗} q - 2 ^{∗} k +1 ... p ^{∗} q - 1 ^{∗} k in der verbleibenden Unterlagen zu liegen kommen und die Einzelspulen i = p ^{∗} q - 1 ^{∗} k +1 ... p ^{∗} q ^{∗} k in verbleibenden Oberlagen der zweiten Phase zu liegen kommen, und
daran anschließend für die Spulengruppe der Polpaarzahl p = 1 der ersten Phase,
Wickeln der verbleibenden Einzelspulen i = p ^{∗} q - 1 ^{∗} k +1 ... p ^{∗} q ^{∗} k der Polpaarzahl p = 1 der ersten Spulengruppe, so dass die Einzelspulen i = p ^{∗} q - 1 ^{∗} k +1 ... p ^{∗} q ^{∗} k in verbleibenden Oberlagen der dritten Phase der vorhergehenden Polpaarzahl zu liegen kommen.

Die zuvor beschriebene Weiterbildung ist insbesondere dann vorteilig, wenn für die Spulengruppe der Polpaarzahl p = 1 der ersten Phase die letzte Oberlagenwicklung nachträglich eingelegt werden muss. Dies kann dann der Fall sein, wenn in der entsprechenden Nut noch keine Unterlagenwicklung eingelegt ist.

Gemäß einer noch weiteren bevorzugten Weiterbildung weist das Verfahren den Schritt Wickeln der Einzelspulen i = 1 ... p ^{∗} q - 2 ^{∗} k bei q - k ≥ 2 der Reihe nach paarweise konzentrisch zueinander oder der Reihe nach paarweise mit gleicher Spulenweite auf.

Durch eine konzentrische Wicklung werden Überkreuzungen der Wicklungen bzw. Einzelspulen vermieden, so dass sich die Spulengruppen einfacher in die Nuten einziehen lassen.

Nach einer anderen bevorzugten Weiterbildung ist vorgesehen, dass jedes Paar der paarweise der Reihe nach zuerst als Unterlagenwicklung und danach als Oberlagenwicklung in einer jeweiligen Nut eingezogenen Einzelspulen i = 1 ... p ^{∗} q - 2 ^{∗} k eine gleiche Spulenweite aufweist. Gemäß einer weiteren bevorzugten Weiterbildung umfasst das Verfahren den Schritt Wickeln für jede Polpaarzahl p und für jede Phase m eine Mehrzahl Spulengruppen bzw. Spulen. Bevorzugt werden für jede Polpaarzahl p und für jede Phase m 5, 10, 20 oder 50 Spulengruppen bzw. Spulen gewickelt.

Nach einer anderen bevorzugten Weiterbildung sind die Einzelspulen i = 1 ... p ^{∗} q - 2 ^{∗} k bei q - k ≥ 2 der Reihe nach paarweise derart angeordnet, dass die Potentialdifferenz zwischen Unterlagenwicklung und Oberlagenwicklung minimiert ist. Mit anderen Worten sind die Einzelspulen bevorzugt derart angeordnet, dass Einzelspulen mit gleichem oder annähernd gleichem Potential in derselben Nut liegen. In diesem Zusammenhang ist weiter bevorzugt, dass bei Einzelspulen unterschiedlicher Phasen in einer gemeinsamen Nut Einzelspulen der unterschiedlichen Phasen derart gewählt werden, dass die Feldstärke zwischen den Einzelspulen minimiert ist. Durch Einlegen von Einzelspulen mit ähnlichem Potential in dieselbe Nut lässt sich in vorteilhafter Weise erreichen, dass nur eine minimale Feldstärke zwischen den Einzelspulen resultiert, so dass auf ansonsten notwendige Zwischenlagenisolierungen verzichtet werden kann.

Wie zuvor ausgeführt, ist es bei aus dem Stand der Technik bekannten Zweischichtwicklungen regelmäßig notwendig, dass zwischen allen Unterlagenwicklungen und allen Oberlagenwicklungen aufgrund der Potentialdifferenzen der Wicklungen bzw. Einzelspulen Zwischenlagenisolierungen angeordnet sein müssen. In besonders vorteilhafter Weise benötigt das vorgeschlagene Verfahren jedoch keine Zwischenlagenisolation. Entsprechend ist nach einer bevorzugten Weiterbildung vorgesehen, dass alle Unterlagenwicklungen und alle Oberlagenwicklungen zueinander isolationsfrei in die Nuten eingezogen werden. Mit anderen Worten sind keine Zwischenlagenisolierungen zwischen den Unterlagenwicklungen und den Oberlagenwicklungen vorgesehen.

Grundsätzlich lässt sich das vorgeschlagene Verfahren für Statoren und Zweischichtwicklungen unterschiedlicher Lochzahl, Schrittverkürzung und/oder Polpaarzahl verwenden. Nach einer besonders bevorzugten Ausgestaltung ist die Lochzahl q = 3, die Schrittverkürzung k = 1 und Polpaarzahl p = 2.

Gemäß einer bevorzugten Weiterbildung umfasst das Verfahren den Schritt automatisches Wickeln aller Spulengruppen aller Phasen nacheinander. Bevorzugt erfolgt das Wickeln aller Spulengruppen aller Phasen mittels einer Wickelmaschine. In diesem Zusammenhang ist besonders bevorzugt, dass das Wickeln ein Einziehen umfasst und/oder zunächst auf eine Schablone erfolgt und die gewickelten Spulengruppen danach in die Nuten des Stators eingezogen werden. Nachdem die Spulengruppen aller Phasen auf die Schablone aufgewickelt sind, kann die derart erstellte Wicklung in die Nuten des Stators eingezogen werden. Insofern setzt das vorgeschlagene Verfahren nicht zwingend voraus, dass die Einzelspulen direkt in die Nuten eingezogen werden. Stattdessen ist ebenso das Wickeln zunächst auf eine Schablone und späteres Einziehen in die Nuten mit umfasst.

Nach einer noch weiteren bevorzugten Weiterbildung ist wenigstens die Einzelspule i = p ^{∗} q einer Spulengruppe der ersten Phase als Verbindungspunkt zur insbesondere späteren Verbindung der drei Phasen m zu einem Sternpunkt der Zweischichtwicklung des Stators ausgeführt.

Die Aufgabe der Erfindung wird zudem durch einen Stator, eine Dreiphasensynchron- oder -asynchronmaschine, ein Pumpenaggregat, einen Motor und/oder einen Generator mit einer Dreiphasensynchron- oder -asynchronmaschine hergestellt nach einem wie zuvor beschriebenen Verfahren gelöst. Ein derartiger Stator lässt sich automatisiert ohne manuellen Eingriff im Vergleich zu aus dem Stand der Technik bekannten Verfahren kostengünstiger, schneller sowie günstiger herstellen, da die Unterlagenwicklungen und Oberlagenwicklungen ohne Zwischenlagenisolierungen in die Nuten des Stators einsetzbar sind.

Die Aufgabe der Erfindung wird ferner durch eine Verwendung eines zuvor beschriebenen Verfahrens oder eines zuvor beschriebenen Stators für ein Pumpenaggregat, insbesondere für eine Heizung, im Bereich Kälte- und/oder Klimatechnik, zur Wasserversorgung sowie zur Abwasserentsorgung und -reinigung, als Motor und/oder als Generator gelöst.

### Kurze Beschreibung der Zeichnungen

Nachfolgend wird die Erfindung unter Bezugnahme auf die anliegenden Zeichnungen anhand eines bevorzugten Ausführungsbeispiels näher erläutert.

In den Zeichnungen zeigen
- Fig. 1: ein Wickelschema zum Herstellen einer Zweischichtwicklung für einen hohlzylinderförmigen Stator einer Dreiphasensynchron- oder -asynchronmaschine gemäß einem bevorzugten Ausführungsbeispiel der Erfindung in einer schematischen Ansicht und
- Fig. 2: die Zweischichtwicklung hergestellt gemäß dem in Fig. 1 gezeigten Wickelschema auf dem hohlzylinderförmigen Stator der Dreiphasensynchron- oder -asynchronmaschine gemäß dem bevorzugten Ausführungsbeispiel der Erfindung in einer schematischen Schnittansicht senkrecht zur Statorachse.

### Detaillierte Beschreibung der Ausführungsbespiele

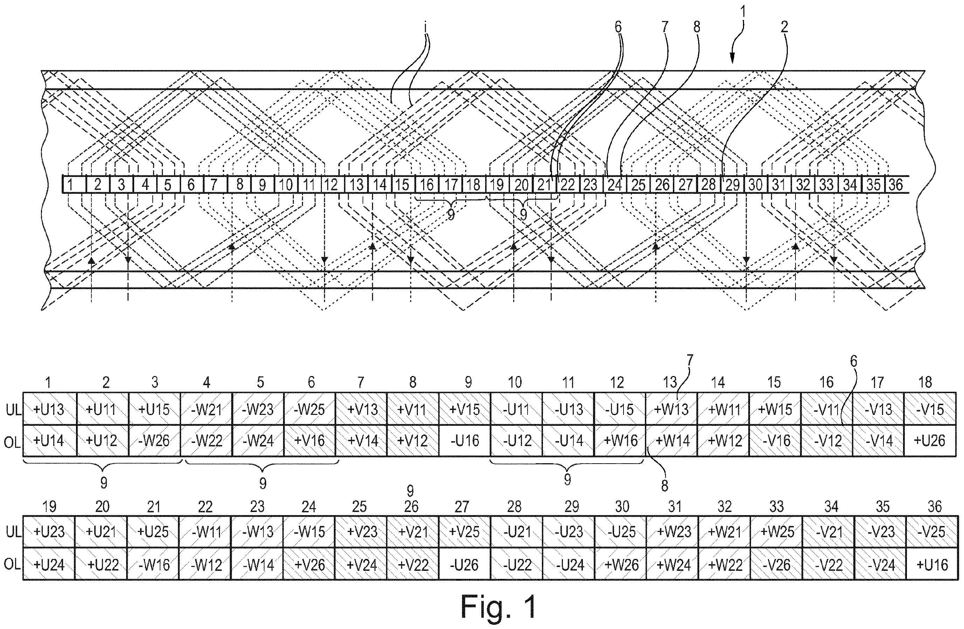

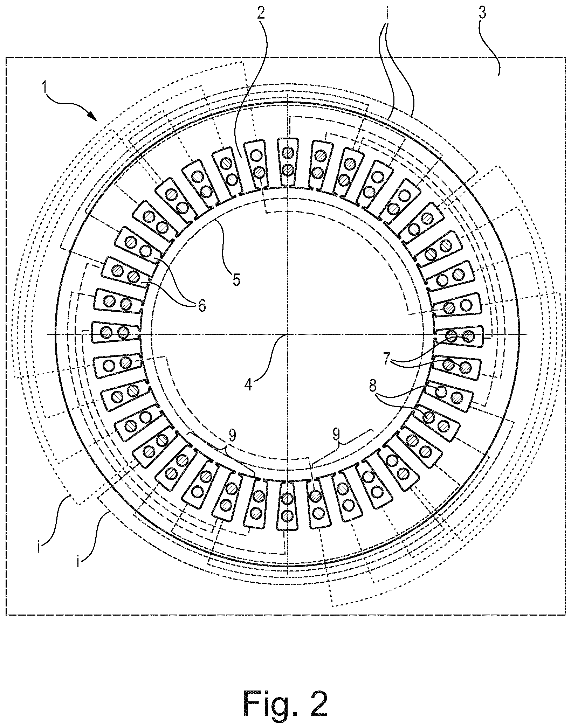

Fig. 1 zeigt ein Wickelschema zum Herstellen einer Zweischichtwicklung 1 mittels eines nachfolgend beschriebenen Verfahrens für einen hohlzylinderförmigen Stator 2 einer Dreiphasensynchron- oder -asynchronmaschine 3, angedeutet durch ein gestricheltes Rechteck, gemäß einem bevorzugten Ausführungsbeispiel der Erfindung in einer schematischen Ansicht. Fig. 2 die durch das in Fig. 1 gezeigte Wickelschema hergestellte Zweischichtwicklung 1 auf dem hohlzylinderförmigen Stator 2 der Dreiphasensynchron- oder - asynchronmaschine 3 gemäß dem bevorzugten Ausführungsbeispiel der Erfindung in einer schematischen Schnittansicht senkrecht zur Statorachse 4.

In den Stator 2 ist ein Rotor 5, angedeutet durch einen gestrichelten Kreis, in Richtung der Statorachse 4 einsetzbar. An seiner radialen Innenseite weist der aus einem Metall mit guten elektrischen und magnetischen Eigenschaften ausgebildete Stator 2 eine Mehrzahl N offener Nuten 6 auf, die jeweils beabstandet zueinander, in radialer Richtung parallel zur Statorachse 4 verlaufen und sich zwischen beiden seitlichen Deckflächen des Stators 2 erstrecken. Der Fig. 2 gezeigte Stator 2 weist N = 36 Nuten auf, die entsprechend in Fig. 1 abgebildet sind.

Wie ferner aus Fig. 2 zu erkennen, ist in jede Nut 6 jeweils eine Unterlagenwicklung 7 als Unterlage in radialer Richtung außen sowie eine Oberlagenwicklung 8 als Oberlage in radialer Richtung innen eingelegt. In dem Wickelschema in Fig. 1 ist in der Figur oben für jede Nut 6 jeweils links die Unterlagenwicklung 7 sowie rechts die Oberlagenwicklung 8 dargestellt. In Fig. 1 ist in der Figur unten für jede der N = 36 Nuten 6 in der oberen Reihe die entsprechende Unterlagenwicklung 7 in der unteren Reihe die entsprechende Oberlagenwicklung 8 dargestellt. Bei dem gezeigten Beispiel ist die Lochzahl q = 3, die Polpaarzahl p = 2 und die Schrittverkürzung k = 1. Entsprechend gilt N = 36 = Lochzahl q ^{∗} Polzahl 2p ^{∗} Phase m = 3 ^{∗} 4 ^{∗} 3 bei vorliegend m = 3 Phasen.

Um nun die Zweischichtwicklung 1 automatisiert beispielsweise mittels einer Wickelmaschine herzustellen und ebenso automatisiert auf den Stator 2 einzuziehen, sieht das Verfahren den nachfolgenden Schritt vor, der nacheinander für jede Phase m = 3 und jede Polpaarzahl p =2 auszuführen ist. Dabei kann die Zweischichtwicklung 1 durch die Wickelmaschine in einem ersten Schritt auf eine nicht gezeigte Schablone gewickelt und in einem zweiten Schritt in die Nuten 6 eingezogen werden. Grundsätzlich kann die Zweischichtwicklung 1 auch direkt in die Nuten 6 eingezogen werden. Insofern wird im Rahmen der Erfindung allgemein von Wickeln gesprochen, womit auch ein Einziehen umfasst ist.

Jedenfalls werden gemäß dem vorliegenden Wickelschema p ^{∗} q = 2 ^{∗} 6 in Reihe vorgesehener Einzelspulen i einer der jeweiligen Phase m zugeordneten Spulengruppe mit einem Pol eines Poolpaares in eine Nutengruppe 10 von q = 3 nebeneinanderliegenden Nuten 6 eingebracht. Die Nutengruppe 10 schließt sich, wie aus Fig. 1 zu erkennen ist, an eine Nutengruppe 10 der vorherigen Phase m unmittelbar an. Um 2 ^{∗} q = 2 ^{∗} 3 = 6 Nuten 6 bestandet zu der erstgenannten Nutengruppe 10 der in Rede stehenden Phase m wird der andere Pol des Poolpaares in eine andere Nutengruppe 10 von q = 3 nebeneinanderliegenden Nuten 6 eingebracht. Dabei werden zunächst die Einzelspulen i = 1 ... p ^{∗} q - 2 ^{∗} k = 1 ... 2 ^{∗} 3 - 2 ^{∗} 1 = 1 ... 4 der Reihe nach paarweise zuerst als Unterlagenwicklung 7 und danach als Oberlagenwicklung 8 in die jeweiligen Nut 6 der Nutengruppen 9 eingebracht. Die Einzelspule i = p ^{∗} q - 2 ^{∗} k + 1 ... p ^{∗} q - 1 ^{∗} k = 2 ^{∗} 3 - 2 ^{∗} 1 + 1 .... 2 ^{∗} 3 - 1 ^{∗} 1 = 5 wird in die verbleibende Unterlage der Nutengruppe 10 als Unterlagenwicklung 7 eingebracht. Schließlich wird noch die Einzelspule i = p ^{∗} q - 1 ^{∗} k +1 ... p ^{∗} q ^{∗} k = 2 ^{∗} 3 - 1 ^{∗} k + 1 ... 2 ^{∗} 3 ^{∗} 1 = 6 in die verbleibenden Oberlage der Nutengruppe 10 der vorherigen Phase als Oberlagenwicklung 8 auf eine Unterlagenwicklung 7 der vorherigen Phase eingebracht. Die vorbeschriebenen Schritte werden wie zuoberst erwähnt nacheinander für jede Phase m = 3 und jede Polpaarzahl p =2 ausgeführt.

Konkret Bezug nehmend auf Fig. 1 wird zuerst die erste Einzelspule als Unterlagenwicklung 7 +U11 in die 2. Nut 6 sowie als Unterlagenwicklung 7 -U11 in die 10. Nut 6 eingelegt, wie zuvor beschrieben entweder in eine Schablone oder direkt in die Nut 6. Die zweite Einzelspule wird als Oberlagenwicklung 8 +U12 ebenso in die 2. Nut 6 auf die in dieser Nut bereits befindliche Unterlagenwicklung 7 +U11 eingelegt sowie als Unterlagenwicklung 7 -U12 in die 10. Nut 6 auf die in dieser Nut bereits befindliche Unterlagenwicklung 7 +U11 eingelegt. Zwischen der jeweiligen Unterlagenwicklung 7 und Oberlagenwicklung 8 ist keine Zwischenlagenisolierung vorgesehen. Analoges folgt für die dritte und vierte Einzelspule U13 und U14, welche konzentrisch zu den Einzelspulen U11 und U12 diese einfassen eingezogen werden. Die Einzelspulen können ebenso der Reihe nach paarweise mit gleicher Spulenweite eingezogen werden. Selbstredend sind die Einzelspulen einer Spulengruppe hintereinander in Reihe verschaltet, nämlich als durchgehender mit Isolationslack beschichteter Kupferlack.

Sodann wird die fünfte Einzelspule U15 in die noch verfügbare Unterlage der Nutengruppe 9 als Unterlagenwicklung 7 eingezogen. Die letzte sechste Einzelspule U16 wird jedoch nicht als Oberlagenwicklung 8 auf die Unterlagenwicklung 7 der fünften Einzelspule U15 gelegt, sondern aufgrund der Schrittverkürzung k = 1 auf die noch nicht mit einer Oberlagenwicklung 8 bedeckte Unterlagenwicklung 7 der vorherigen Phase, vorliegend in die 36. Nut 6 sowie der 18. Nut 6 auf die fünfte Einzelspule V15 als Oberlagenwicklung 8 eingelegt. Sofern in der vorherigen Phase noch keine Unterlagenwicklung 7 eingesetzt ist, verbleibt die sechste Einzelspule U16 zunächst nicht eingesetzt und wird nach Einsetzen der fünften Einzelspule V15 als Unterlagenwicklung 7 auf diese als Oberlagenwicklung 8 eingesetzt.

Für die Phasen W und V wird in der Folge analog vorgegangen, bis dass alle Einzelspulen eingelegt sind, wie in Fig. 1 und Fig. 2 zu erkennen ist. Für jede Polpaarzahl p = 2 und für jede Phase m = 3 wird eine Mehrzahl Spulengruppen auf den Stator 2 gewickelt. Im Ergebnis weist jedes Paar der paarweise der Reihe nach zuerst als Unterlagenwicklung 7 und danach als Oberlagenwicklung 8 in einer jeweiligen Nut 6 eingezogenen Einzelspulen i = 1 ...p ^{∗} q - 2 ^{∗} k = 1 ... 4 eine gleiche Spulenweite auf, nämlich vorliegend die Spulenweite von 8 Nuten 6 für die Einzelspulen U11/U12 und die Spulenweite von 10 Nuten 6 für die Einzelspulen U13/14.

Die Einzelspulen i = 1 ... p ^{∗} q - 2 ^{∗} k = 1 ... 4 sind ferner der Reihe nach paarweise so angeordnet, dass die Potentialdifferenz zwischen der jeweiligen Unterlagenwicklung 7 und Oberlagenwicklung 8 minimiert ist. Mit anderen Worten werden Einzelspulen gleichen oder annähernd gleichen Potentials in die gleiche Nut 6 gelegt. Bedingt dadurch kann durch das vorgeschlagene Verfahren eine Zweischichtwicklung 1 mit zu vernachlässigbarer Asymmetrie gewickelt und alle Unterlagenwicklungen 7 und alle Oberlagenwicklungen 8 zueinander isolationsfrei in die Nuten 6 eingezogen werden. Der durch das beschriebene Verfahren herstellte Stator 2 lässt sich besonders einfach vollautomatisiert beispielsweise mittels einer Wickelmaschine herstellen und für ein Pumpenaggregat, als Motor und/oder als Generator verwenden.

Das beschriebene Ausführungsbeispiel ist lediglich ein Beispiel, das im Rahmen der Ansprüche auf vielfältige Weise modifiziert und/oder ergänzt werden kann. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Zweischichtwicklung | 1 |
| Stator | 2 |
| Dreiphasensynchronoder -asynchronmaschine | 3 |
| Statorachse | 4 |
| Rotor | 5 |
| Nut | 6 |
| Unterlagenwicklung | 7 |
| Oberlagenwicklung | 8 |
| Nutengruppe | 9 |

## Patentansprüche

1. Verfahren zum Wickeln einer für eine Dreiphasensynchron- oder -asynchronmaschine (3) vorgesehenen Zweischichtwicklung (1) auf einen hohlzylinderförmigen Stator (2) in einem Einzug, mit den Schritten:
Bereitstellen des Stators (2), in welchen ein Rotor (5) in Richtung einer Statorachse (4) einsetzbar ist, wobei der Stator (2) eine Mehrzahl N offener Nuten (6) aufweist, in welche jeweils eine Unterlagenwicklung (7) als Unterlage in radialer Richtung außen und eine Oberlagenwicklung (8) als Oberlage in radialer Richtung innen einsetzbar sind, wobei N = Lochzahl q ^{∗} Polzahl 2p ^{∗} Phase m, mit Lochzahl q des Stators ≥ 3, Polzahl 2 ^{∗} p des Stators (2) ≥ 2 und Phase m = 3, und
nacheinander für jede Phase m und für jede Polpaarzahl p:
Wickeln von p ^{∗} q in Reihe vorgesehener Einzelspulen i einer der jeweiligen Phase m zugeordneten Spulengruppe mit einem Pol eines Poolpaares in eine Nutengruppe (9) von q nebeneinander liegenden Nuten (6), die sich an eine Nutengruppe (9) der vorherigen Phase anschließt, und mit dem anderen Pol des Poolpaares in eine andere Nutengruppe (9) von q nebeneinander liegenden Nuten (6), die um 2 ^{∗} q Nuten (6) beabstandet zu
der Nutengruppe (9) angeordnet ist, so dass nach die Einzelspulen i = 1 ... p ^{∗} q - 2 ^{∗} k der Reihe paarweise zuerst als Unterlagenwicklung (7) und danach als Oberlagenwicklung (8) in einer jeweiligen Nut (6) der Nutengruppen (9) zu liegen kommen, die Einzelspulen i = p ^{∗} q - 2 ^{∗} k +1 ... p ^{∗} q - 1 ^{∗} k in verbleibenden Unterlagen der Nutengruppen (9) zu liegen kommen und die Einzelspulen i = p ^{∗} q - 1 ^{∗} k +1 ... p ^{∗} q ^{∗} k in verbleibenden Oberlagen der Nutengruppen (9) der vorherigen Phase zu liegen kommen, mit Schrittverkürzung k < q.

2. Verfahren nach dem vorhergehenden Anspruch, mit, für jede Polpaarzahl p nacheinander, den folgenden Schritten:
Wickeln von p ^{∗} q in Reihe vorgesehener Einzelspulen i einer ersten Spulengruppe der ersten Phase mit einem Pol eines Polpaares in eine erste Nutengruppe (9) von q nebeneinander liegenden Nuten (6) und mit dem anderen Pol des Polpaares in eine zweite Nutengruppe (9) von q nebeneinander liegenden Nuten (6), die um 2 ^{∗} q Nuten (6) bestandet zu der ersten Nutengruppe (9) angeordnet ist, so dass die Einzelspulen i = 1 ... p ^{∗} q - 2 ^{∗} k der Reihe nach paarweise zuerst als Unterlagenwicklung (7) und danach als Oberlagenwicklung (8) in einer gemeinsamen Nut (6) zu liegen kommen, die Einzelspulen i = p ^{∗} q - 2 ^{∗} k +1 ... p ^{∗} q - 1 ^{∗} k in verbleibenden Unterlagen der ersten Nutengruppe (9) zu liegen kommen und, bei Polpaarzahl p > 1, die Einzelspulen i = p ^{∗} q - 1 ^{∗} k + 1 ... p ^{∗} q ^{∗} k in verbleibenden Oberlagen der dritten Phase zu liegen kommen,
Wickeln von p ^{∗} q in Reihe vorgesehener Einzelspulen i einer zweiten Spulengruppe der zweiten Phase mit einem Pol eines Polpaares in eine dritte Nutengruppe (9) von q nebeneinander liegenden Nuten (6), die sich an die erste Nutengruppe (9) anschließt, und mit dem anderen Pol des Polpaares in eine vierte Nutengruppe (9) von q nebeneinander liegenden Nuten (6), die um 2 ^{∗} q Nuten (6) bestandet zu der dritten Nutengruppe (9) neben der zweiten Nutengruppe (9) liegt, so dass die Einzelspulen i = 1 ... p ^{∗} q - 2 ^{∗} k der Reihe nach paarweise zuerst als Unterlagenwicklung (7) und danach als Oberlagenwicklung (8) in einer jeweiligen Nut (6) zu liegen kommen, die Einzelspulen i = p ^{∗} q - 2 ^{∗} k +1 ... p ^{∗} q - 1 ^{∗} k in verbleibenden Unterlagen zu liegen kommen und die Einzelspulen i = p ^{∗} q - 1 ^{∗} k +1 ... p ^{∗} q ^{∗} k in verbleibenden Oberlagen der ersten Phase zu liegen kommen, und
Wickeln von p ^{∗} q in Reihe vorgesehener Einzelspulen i einer dritten Spulengruppe der dritten Phase mit einem Pol eines Polpaares in eine fünfte Nutengruppe (6) von q nebeneinander liegenden Nuten, die sich an die dritte Nutengruppe (9) anschließt, und mit dem anderen Pol des Polpaares in eine sechste Nutengruppe (9) von q nebeneinander liegenden Nuten (6), die um 2 ^{∗} q Nuten (6) bestandet zu der fünften Nutengruppe (9) neben der vierten Nutengruppe (9) liegt, so dass die Einzelspulen i = 1 ... p ^{∗} q - 2 ^{∗} k der Reihe nach paarweise zuerst als Unterlagenwicklung (7) und danach als Oberlagenwicklung (8) in einer jeweiligen Nut (6) zu liegen kommen, die Einzelspulen i = p ^{∗} q - 2 ^{∗} k +1 ... p ^{∗} q - 1 ^{∗} k in der verbleibenden Unterlagen zu liegen kommen und die Einzelspulen i = p ^{∗} q - 1 ^{∗} k +1 ... p ^{∗} q ^{∗} k in verbleibenden Oberlagen der zweiten Phase zu liegen kommen, und
daran anschließend für die Spulengruppe der Polpaarzahl p = 1 der ersten Phase,
Wickeln der verbleibenden Einzelspulen i = p ^{∗} q - 1 ^{∗} k +1 ... p ^{∗} q ^{∗} k der Polpaarzahl p = 1 der ersten Spulengruppe, so dass die Einzelspulen i = p ^{∗} q - 1 ^{∗} k +1 ... p ^{∗} q ^{∗} k in verbleibenden Oberlagen der dritten Phase der vorhergehenden Polpaarzahl zu liegen kommen.

3. Verfahren nach einem der vorhergehenden Ansprüche, mit dem Schritt:
Wickeln der Einzelspulen i = 1 ... p ^{∗} q - 2 ^{∗} k bei q - k ≥ 2 der Reihe nach paarweise konzentrisch zueinander oder der Reihe nach paarweise mit gleicher Spulenweite.

4. Verfahren nach einem der vorhergehenden Ansprüche, wobei jedes Paar der paarweise der Reihe nach zuerst als Unterlagenwicklung (7) und danach als Oberlagenwicklung (8) in einer jeweiligen Nut (6) eingezogenen Einzelspulen i = 1 ... p ^{∗} q - 2 ^{∗} k eine gleiche Spulenweite aufweist.

5. Verfahren nach einem der vorhergehenden Ansprüche, mit dem Schritt:
Wickeln für jede Polpaarzahl p und für jede Phase m eine Mehrzahl Spulengruppen.

6. Verfahren nach einem der vorhergehenden Ansprüche, wobei die Einzelspulen i = 1 ... p ^{∗} q - 2 ^{∗} k bei q - k ≥ 2 der Reihe nach paarweise derart angeordnet sind, dass die Potentialdifferenz zwischen Unterlagenwicklung (7) und der Oberlagenwicklung (8) minimiert ist.

7. Verfahren nach einem der vorhergehenden Ansprüche, wobei bei Einzelspulen unterschiedlicher Phasen in einer gemeinsamen Nut (6) Einzelspulen der unterschiedlichen Phasen derart gewählt werden, dass die Feldstärke zwischen den Einzelspulen minimiert ist.

8. Verfahren nach einem der vorhergehenden Ansprüche, wobei alle Unterlagenwicklungen (7) und alle Oberlagenwicklungen (8) zueinander isolationsfrei in die Nuten (6) eingezogen werden.

9. Verfahren nach einem der vorhergehenden Ansprüche, mit Lochzahl q = 3, Schrittverkürzung k = 1 und Polpaarzahl p =2.

10. Verfahren nach einem der vorhergehenden Ansprüche, mit dem Schritt automatisches Wickeln aller Spulengruppen aller Phasen nacheinander.

11. Verfahren nach einem der vorhergehenden Ansprüche, wobei das Wickeln ein Einziehen umfasst und/oder zunächst auf eine Schablone erfolgt und die gewickelten Spulengruppen danach in die Nuten (6) des Stators (2) eingezogen werden.

12. Verfahren nach einem der vorhergehenden Ansprüche, wobei wenigstens die Einzelspule i = p ^{∗} q einer Spulengruppe der ersten Phase als Verbindungspunkt zur späteren Verbindung der drei Phasen zu einem Sternpunkt der Zweischichtwicklung (1) des Stators (2) ausgeführt ist.

13. Stator (2), oder Dreiphasensynchron- oder -asynchronmaschine (3), Pumpenaggregat, Motor und/oder Generator mit einer Dreiphasensynchron- oder -asynchronmaschine (3) mit einem Stator (2) hergestellt nach einem Verfahren nach einem der vorhergehenden Ansprüche.

14. Verwendung eines Verfahrens nach einem der vorhergehenden Ansprüche oder eines Stators (2) nach dem vorhergehenden Anspruch für ein Pumpenaggregat, für einen Motor und/oder Generator.

## Claims

1. Method for winding a two-layer winding (1) intended for a three-phase synchronous or asynchronous machine (3) on a hollow cylindrical stator (2) by inserting, comprising the steps:
providing the stator (2) in which a rotor (5) can be inserted in the direction of a stator axis (4), wherein the stator (2) comprises a plurality N of open slots (6), in each of which a back layer winding (7) can be inserted as a back layer in the radial direction at the outside and a top layer winding (8) as a top layer in the radial direction at the inside, wherein N = number of holes q ^{∗} number of poles 2p ^{∗} phase m, with number of holes q of the stator ≥ 3, number of poles 2 ^{∗} p of the stator (2) ≥ 2 and phase m = 3; and successively for each phase m and for each pole pair number p:
winding of p ^{∗} q individual coils i provided in series of a coil group associated to the respective phase m with one pole of a pole pair in a slot group (9) of q adjacent slots (6), which adjoins a slot group (9) of the previous phase, and with the other pole of the pole pair in another slot group (9) of q adjacent slots (6) which is arranged spaced apart by 2 ^{∗} q slots (6) from the slot group (9), so that the individual coils i = 1 ... p ^{∗} q - 2 ^{∗} k of the series come to rest in pairs in a respective slot (6) of the slot group (9) first as a back layer winding (7) and then as a top layer winding (8), the individual coils i = p ^{∗} q - 2 ^{∗} k + 1 ... p ^{∗} q - 1 ^{∗} k come to rest in the remaining back layers of the slot group (9) and the individual coils i = p ^{∗} q - 1 ^{∗} k + 1 ... p ^{∗} q ^{∗} k come to rest in the remaining top layers of the slot group (9) of the previous phase, with short pitch k < q.

2. Method according to the preceding claim, with the following consecutive steps for each pole pair number p:
winding of p ^{∗} q individual coils i provided in series of a first coil group of the first phase with one pole of a pole pair in a first slot group (9) of q adjacent slots (6) and with the other pole of the pole pair in a second slot group (9) of q adjacent slots (6) which is arranged spaced apart from the first slot group (9) by 2 ^{∗} q slots (6), so that the individual coils i = 1 ... p ^{∗} q - 2 ^{∗} k one after the other come to rest in pairs first as a back layer winding (7) and then as a top layer winding (8) in a common slot (6), the individual coils i - p ^{∗} q - 2 ^{∗} k + 1 ... p ^{∗} q - 1 ^{∗} k come to rest in the back layers of the first slot group (9) and, at pole pair number p > 1, the individual coils i = p ^{∗} q - 1 ^{∗} k + 1 ... p ^{∗} q ^{∗} k come to rest in remaining top layers of the third phase;
winding of p ^{∗} q individual coils i provided in series of a second coil group of the second phase with one pole of a pole pair in a third slot group (9) of q adjacent slots (6), which adjoins the first slot group (9), and with the other pole of the pole pair in a fourth slot group (9) of q adjacent slots (6) which is arranged spaced apart from the third slot group (9) by 2 ^{∗} q slots (6) adjacent to the second slot group (9), so that the individual coils i = 1 ... p ^{∗} q - 2 ^{∗} k one after the other come to rest in pairs first as a back layer winding (7) and then as a top layer winding (8) in a respective slot (6), the individual coils i = p ^{∗} q - 2 ^{∗} k + 1 ... p ^{∗} q - 1 ^{∗} k come to rest in the remaining back layers and the individual coils i = p ^{∗} q - 1 ^{∗} k + 1 ... p ^{∗} q ^{∗} k come to rest in the remaining top layers of the first phase; and
winding of p ^{∗} q individual coils i provided in series of a third coil group of the third phase with one pole of a pole pair in a fifth slot group (6) of q adjacent slots, which adjoins the third slot group (9), and with the other pole of the pole pair in a sixth slot group (9) of q adjacent slots (6) which is spaced apart from the fifth slot group (9) by 2 ^{∗} q slots (6) adjacent to the fourth slot group (9), so that the individual coils i = 1 ... p ^{∗} q - 2 ^{∗} k one after the other come to rest in pairs first as a back layer winding (7) and then as a top layer winding (8) in a respective slot (6), the individual coils i = p ^{∗} q - 2 ^{∗} k + 1 ... p ^{∗} q - 1 ^{∗} k come to rest in the remaining back layers and the individual coils i = p ^{∗} q -1 ^{∗} k + 1 ... p ^{∗} q ^{∗} k come to rest in the remaining top layers of the second phase, and
subsequently for the coil group of the pole pair p = 1 of the first phase,
winding the remaining individual coils i = p ^{∗} q - 1 ^{∗} k + 1 ... p ^{∗} q ^{∗} k of the pole pair number p = 1 of the first coil group, so that the individual coils i = p ^{∗} q - 1 ^{∗} k + 1 ... p ^{∗} q ^{∗} k come to rest in the remaining top layers of the third phase of the previous pole pair number.

3. Method according to any one of the preceding claims, comprising the step:
winding the individual coils i = 1 ... p ^{∗} q - 2 ^{∗} k at q - k ≥ 2 one after the other in pairs concentrically to one another or one after the other in pairs with the same coil width.

4. Method according to any one of the preceding claims, wherein each pair of the individual coils i = 1 ... p ^{∗} q - 2 ^{∗} k inserted in pairs one after the other first as a back layer winding (7) and then as a top layer winding (8) in a respective slot (6) have an identical coil width.

5. Method according to any one of the preceding claims, comprising the step:
winding a plurality of coil groups for each pole pair number p and for each phase m.

6. Method according to any one of the preceding claims, wherein the individual coils i - 1 ... p ^{∗} q - 2 ^{∗} k for q - k ≥ 2 are arranged one after the other in pairs in such a way that the potential difference between the back layer winding (7) and the top layer winding (8) is minimized.

7. Method according to any one of the preceding claims, wherein in the case of individual coils of different phases in a common slot (6), individual coils of the different phases are selected in such a way that the field strength between the individual coils is minimized.

8. Method according to any one of the preceding claims, wherein all back layer windings (7) and all top layer windings (8) are inserted in the slots (6) isolation-free with respect to each other.

9. Method according to any one of the preceding claims, with number of holes q = 3, short pitch k = 1 and pole pair number p = 2.

10. Method according to any one of the preceding claims, comprising the step of automatically winding all coil groups of all phases one after the other.

11. Method according to one of the preceding claims, wherein the winding comprises inserting and/or is first carried out on a template and then the wound coil groups are inserted into the slots (6) of the stator (2).

12. Method according to any one of the preceding claims, wherein at least the individual coil i = p ^{∗} q of a coil group of the first phase is configured as a connection point for later connection of the three phases to a star point of the two-layer winding (1) of the stator (2).

13. Stator (2), or
three-phase synchronous or asynchronous machine (3), pump unit, motor and/or generator comprising a three-phase synchronous or asynchronous machine (3) with a stator (2) produced according to a method according to any one of the preceding claims.

14. Use of a method according to any one of the preceding claims or a stator (2) according to the preceding claim for a pump unit, for a motor and/or a generator.

## Revendications

1. Procédé d'enroulement d'un bobinage à deux couches (1) prévu pour une machine synchrone ou asynchrone triphasée (3) sur un stator (2) en forme de cylindre creux en une entrée, avec les étapes :
de mise au point du stator (2), dans lequel un rotor (5) peut être engagé en direction d'un axe de stator (4), où le stator (2) présente une multiplicité N de rainures (6) ouvertes, dans lesquelles respectivement un bobinage de couche inférieure (7) peut être inséré à l'extérieur en direction radiale pour servir de couche inférieure, et un bobinage de couche supérieure (8) peut être inséré à l'intérieur en direction radiale pour servir de couche supérieure , où N = numéro de trou q^{∗} numéro de pôle 2p^{∗}phase m, avec un numéro de trou q du stator ≥ 3, un numéro de pôle 2^{∗}p du stator (2) ≥ 2 et une phase m = 3, et
l'un après l'autre, pour chaque phase m et pour chaque numéro de paire de pôles p;
d'enroulement de p^{∗}q bobines individuelles i prévues en rangée d'un des groupes de bobines associé à la phase m respective avec un pôle d'une paire de pôles dans un groupe de rainures (9) de q rainures (6) situées les unes à côté des autres, qui suit un groupe de rainures (9) de la phase précédente, et est disposé espacé de 2^{∗}q rainures (6) par rapport à l'autre pôle de la paire de pôles dans un autre groupe de rainures (9) de q rainures (6) situées les unes à côté des autres, de sorte que les bobines individuelles i = 1 .. pq-2^{∗} k de la rangée sont situées par paires d'abord en tant que bobinage de couche inférieure (7) et ensuite en tant que bobinage de couche supérieure (8) dans une rainure (6) respective des groupes de rainures (9), les bobines individuelles i = p ^{∗} q-2 ^{∗} k + 1 ... p ^{∗}q-1 ^{∗} k se situent dans des couches inférieures restantes des groupes de rainures (9) et les bobines individuelles i = p^{∗}q-1^{∗}k+1 ... p^{∗}q^{∗}k se situent dans des couches supérieures restantes des groupes de rainures (9) de la phase précédente avec un raccourcissement de pas k < q.

2. Procédé selon la revendication précédente, avec, pour chaque numéro de paire de pôles p, les étapes suivantes successives :
l'enroulement de p^{∗}q bobines individuelles i prévues en rangée dans un premier groupe de bobines de la première phase avec un pôle d'une paire de pôles dans un premier groupe de rainures (9) de q rainures (6) situées les unes à côté des autres et avec l'autre pôle de la paire de pôles dans un deuxième groupe de rainures (9) de q rainures (6) situées les unes à côté des autres qui sont espacées de 2^{∗}q rainures (6) par rapport au premier groupe de rainures (9), de sorte que les bobines individuelles i = 1 ... p^{∗}q-2^{∗}k de la rangée se situent par paires d'abord en tant que bobinage de couche inférieure (7) et ensuite en tant que bobinage de couche supérieure (8) dans une rainure (6) commune, les bobines individuelles i = p^{∗}q-2^{∗}k+1 ... p^{∗}q-1^{∗}k vont se situer dans des couches inférieures restantes du premier groupe de rainures (9), et, pour un numéro de paire de pôles p > 1, les bobines individuelles i = p^{∗}q-1^{∗}k+1 ... p^{∗}q^{∗}k vont se situer dans des couches supérieures restantes de la troisième phase,
l'enroulement de p^{∗}q bobines individuelles i prévues en rangée dans un deuxième groupe de bobines de la deuxième phase avec un pôle d'une paire de pôles dans un troisième groupe de rainures (9) de q rainures (6) situées les unes à côté des autres qui suit le premier groupe de rainures (9), et avec l'autre pôle de la paire de pôles dans un quatrième groupe de rainures (9) de q rainures (6) situées les unes à côté des autres qui sont espacées de 2^{∗}q rainures (6) par rapport au troisième groupe de rainures (9) à côté du deuxième groupe de rainures (9), de sorte que les bobines individuelles i = 1 ... p^{∗}q-2^{∗}k de la rangée se situent par paires d'abord en tant que bobinage de couche inférieure (7) et ensuite en tant que bobinage de couche supérieure (8) dans une rainure (6) respective, les bobines individuelles i = p^{∗}q-2^{∗}k+1 ... p^{∗}q-1^{∗}k vont se situer dans des couches inférieures restantes et les bobines individuelles i = p^{∗}q-1^{∗}k+1 ... p^{∗}q^{∗}k vont se situer dans des couches supérieures restantes de la troisième phase, et
l'enroulement de p^{∗}q bobines individuelles i prévues en rangée dans un troisième groupe de bobines de la troisième phase avec un pôle d'une paire de pôles dans un cinquième groupe de rainures (6) de q rainures situées les unes à côté des autres, qui suit le troisième groupe de rainures (9), et avec l'autre pôle de la paire de pôles dans un sixième groupe de rainures (9) de q rainures (6) situées les unes à côté des autres qui sont espacées de 2^{∗}q rainures (6) par rapport au cinquième groupe de rainures (9), à côté du quatrième groupe de rainures (9), de sorte que les bobines individuelles i = 1 ... p^{∗}q-2^{∗}k de la rangée se situent par paires d'abord en tant que bobinage de couche inférieure (7) et ensuite en tant que bobinage de couche supérieure (8) dans une rainure (6) respective, les bobines individuelles i = p^{∗}q-2^{∗}k+1 ... p^{∗}q-1^{∗}k vont se situer dans des couches inférieures restantes, et les bobines individuelles i = p^{∗}q-1^{∗}k+1 ... p^{∗}q^{∗}k vont se situer dans des couches supérieures restantes de la deuxième phase, et
ensuite, pour le groupe de bobines du numéro de paire de pôles p = 1 de la première phase,
l'enroulement des bobines individuelles i = p^{∗}q-1^{∗}k+1 ..p^{∗}q^{∗}k restantes de la paire de pôles p = 1 du premier groupe de bobines de sorte que les bobines individuelles i = p^{∗}q-1^{∗}k+1 ... p^{∗}q^{∗}k vont se situer dans des couches supérieures restantes de la troisième phase du numéro de paire de pôles précédent.

3. Procédé selon l'une des revendications précédentes, avec l'étape :
d'enroulement des bobines individuelles i = 1 ... p^{∗}q-2^{∗}k pour q - k ≥ 2 de la rangée par paires de manière concentrique les unes par rapport aux autres ou de la rangée par paires avec une même largeur de bobine.

4. Procédé selon l'une des revendications précédentes, dans lequel chaque paire des bobines individuelles i = 1 ... p^{∗}q-2^{∗}k insérées par paires de la rangée sous forme d'abord d'un bobinage de couche inférieure (7) et ensuite sous forme d'un bobinage de couche supérieure (8) présente une même largeur de bobine.

5. Procédé selon l'une des revendications précédentes, avec l'étape :
d'enroulement d'une multiplicité de groupes de bobines pour chaque numéro de paire de pôles p et pour chaque phase m.

6. Procédé selon l'une des revendications précédentes, dans lequel les bobines individuelles i = 1 ... p^{∗}q-2^{∗}k pour q - q ≥ 2 de la rangée sont disposées par paires de sorte que la différence de potentiel entre le bobinage de couche inférieure (7) et le bobinage de couche supérieure (8) est minimisée.

7. Procédé selon l'une des revendications précédentes, dans lequel, pour des bobines individuelles de différentes phases, dans une rainure (6) commune, les bobines individuelles des différentes phases sont choisies de telle manière que l'intensité du champ entre les bobines individuelles est minimisée.

8. Procédé selon l'une des revendications précédentes, dans lequel tous les bobinages de couche inférieure (7) et tous les bobinages de couche supérieure (8) sont insérés dans les rainures (6) exempts d'isolation les uns par rapport aux autres.

9. Procédé selon l'une des revendications précédentes, avec un numéro de trou q = 3, un raccourcissement de pas k = 1 et un numéro de paire de pôles p = 2.

10. Procédé selon l'une des revendications précédentes, avec l'étape d'enroulement automatique de tous les groupes de bobines de toutes les phases les uns après les autres.

11. Procédé selon l'une des revendications précédentes, dans lequel l'enroulement comprend une insertion, et/ou a lieu d'abord sur un gabarit et les groupes de bobines enroulés sont ensuite insérés dans les rainures (6) du stator (2).

12. Procédé selon l'une des revendications précédentes, dans lequel au moins la bobine individuelle i = p^{∗}q d'un groupe de bobines de la première phase est conçue comme un point de liaison pour une liaison ultérieure des trois phases pour faire un centre en étoile du bobinage en deux couches (1) du stator (2).

13. Stator (2) ou machine synchrone ou asynchrone triphasée (3), ensemble de pompes, moteur et/ou générateur avec une machine synchrone ou asynchrone triphasée (3) dotée d'un stator (2), fabriqué d'après un procédé selon l'une des revendications précédentes.

14. Utilisation d'un procédé selon l'une des revendications précédentes ou d'un stator (2) selon la revendication précédente pour un ensemble de pompes, pour un moteur et/ou un générateur.
